# DEMANDE DE BREVET EUROPEEN

(11) **EP 3 670 471 A1**
(43) Date de publication de la demande: **24.06.2020**
(21) Numéro de dépôt: 19218504.9
(22) Date de dépôt: 20.12.2019
(51) Int. Cl.: C04B 28/00, H01B 7/295, H01B 13/32, H05B 33/10

(54) **COMPOSITION GÉOPOLYMÈRE RÉSISTANTE AU FEU, NOTAMMENT POUR UN DISPOSITIF COMPRENANT UN CÂBLE OU UN ACCESSOIRE POUR CÂBLE**

(30) Priorité: 21.12.2018 FR 1874065
(71) Demandeur: Nexans, 92400 Courbevoie (FR)
(72) Inventeur: GYPPAZ, Franck, 69003 LYON (FR); AUVRAY, Thierry, 69006 LYON (FR); ESTREBOOU, Nicolas, 69600 OULLINS (FR)
(74) Mandataire: De Lamo Marin, Sandra

(57) **Abrégé**

La présente invention est relative à une composition géopolymère comprenant au moins deux kaolins calcinés à des températures de calcination différentes, au moins un silicate alcalin, de l'eau, et éventuellement au moins une base alcaline ; à un procédé de préparation de ladite composition géopolymère ; à un matériau composite comprenant un matériau géopolymère obtenu à partir de ladite composition géopolymère ; à un dispositif comprenant un câble et/ou un accessoire pour câble, ledit câble et/ou ledit accessoire pour câble comportant au moins une couche géopolymère à base dudit matériau géopolymère ou dudit matériau composite ; ainsi qu'à un procédé de fabrication d'un tel dispositif.

## Description

La présente invention est relative à une composition géopolymère comprenant au moins deux kaolins calcinés à des températures de calcination différentes, au moins un silicate alcalin, de l'eau, et éventuellement au moins une base alcaline ; à un procédé de préparation de ladite composition géopolymère ; à un matériau composite comprenant un matériau géopolymère obtenu à partir de ladite composition géopolymère ; à un dispositif comprenant un câble et/ou un accessoire pour câble, ledit câble et/ou ledit accessoire pour câble comportant au moins une couche géopolymère à base dudit matériau géopolymère ou dudit matériau composite ; ainsi qu'à un procédé de fabrication d'un tel dispositif.

Elle s'applique typiquement mais non exclusivement à des compositions résistantes au feu, en particulier pouvant être utilisées dans des câbles électriques et/ou optiques destinés au transport d'énergie et/ou à la transmission de donnée tels que des câbles électriques et/ou optiques de sécurité résistants au feu, notamment sans halogène, susceptibles de fonctionner pendant un laps de temps donné dans des conditions d'incendie sans être pour autant propagateur d'incendie ni générateur de fumées importantes ; et dans leurs accessoires tels que des jonctions et/ou des terminaisons. Ces câbles de sécurité sont en particulier des câbles de transport d'énergie moyenne tension (notamment de 6 à 45-60 kV) ou des câbles de transmission basse fréquence, tels que des câbles de contrôle ou de signalisation.

Du document WO 2016/092200 A1 est connue l'utilisation dans un câble ou un accessoire pour câble, et en particulier dans une couche dudit câble ou dudit accessoire, d'un matériau composite comprenant un matériau géopolymère et un matériau fibreux non tissé. Le matériau composite est obtenu par imprégnation du matériau fibreux non tissé tel qu'un ruban papier non tissé, par une composition géopolymère comprenant un silicate de sodium, de l'eau, de l'hydroxyde de potassium, un métakaolin et des fibres de polypropylène. Toutefois, cette solution ne donne pas entière satisfaction du point du vue du procédé, et également du point du vue des propriétés mécaniques de la couche ainsi obtenue. En particulier, l'étape d'imprégnation est difficile à contrôler et à mettre en œuvre, de par le durcissement parfois trop rapide de la composition géopolymère pendant cette étape. Par ailleurs, la couche ainsi obtenue devient dure avec le temps, rendant difficile sa manipulation, ou la manipulation du câble ou de l'accessoire comprenant ladite couche.

Le but de l'invention est par conséquent de pallier tout ou partie des inconvénients précités, et de fournir une composition géopolymère présentant des propriétés de flexibilité et de durabilité améliorées, tout en garantissant une bonne résistance au feu.

L'invention a pour premier objet une composition géopolymère, caractérisée en ce qu'elle comprend un premier métakaolin choisi parmi les kaolins calcinés à une température T_{c1} d'au moins 650°C environ, et un deuxième métakaolin choisi parmi les kaolins calcinés à une température T_{c2} telle que T_{c2} - T_{c1} ≥ 100°C environ, au moins un premier silicate alcalin, de l'eau, et éventuellement une base alcaline.

Grâce à la composition géopolymère de l'invention, on obtient des propriétés mécaniques, notamment en termes de flexibilité et de durabilité, améliorées, tout en garantissant de bonnes propriétés de réaction et de résistance au feu.

Dans l'invention, la composition géopolymère est une composition précurseur d'un géopolymère. En d'autres termes, elle comprend des ingrédients (premier métakaolin, deuxième métakaolin, premier silicate alcalin, eau, et éventuellement une base alcaline et/ou un deuxième silicate alcalin) qui géopolymérisent ensemble pour former un géopolymère également dénommé matériau géopolymère tel que défini ci-après.

### Le premier métakaolin

Dans l'invention, l'expression « métakaolin » signifie un aluminosilicate déhydroxylé. Il est de préférence obtenu par déshydratation d'un kaolin ou d'une kaolinite. Cette déshydratation est classiquement obtenue par calcination.

Selon une forme de réalisation de l'invention, le premier métakaolin est un kaolin calciné à une température T_{c1} d'au moins 700°C environ, et de préférence d'au moins 725°C environ.

Selon une forme de réalisation préférée de l'invention, le premier métakaolin est un kaolin calciné à une température T_{c1} d'au plus 875°C environ, et de préférence d'au plus 825°C environ.

Le premier métakaolin peut comprendre au moins 20% en mole environ, et de préférence au moins 30% en mole environ d'oxyde d'aluminium (Al₂O₃), par rapport au nombre de moles total du premier métakaolin.

Le premier métakaolin peut comprendre au plus 60% en mole environ, et de préférence au plus 50% en mole environ d'oxyde d'aluminium (Al₂O₃), par rapport au nombre de moles total du premier métakaolin.

Le premier métakaolin peut comprendre au moins 35% en mole environ, et de préférence au moins 45% en mole environ d'oxyde de silicium (SiO₂), par rapport au nombre de moles total du premier métakaolin.

Le premier métakaolin peut comprendre au plus 75% en mole environ, et de préférence au plus 65% en mole environ d'oxyde de silicium (SiO₂), par rapport au nombre de moles total du premier métakaolin.

À titre d'exemples de premier métakaolin, on peut citer les métakaolins vendus par la société Imérys, notamment celui commercialisé sous la référence PoleStar® 450.

Le premier métakaolin peut être choisi parmi les kaolins calcinés à T_{c1} telle que définie dans l'invention, pendant au moins 1 min environ, de préférence pendant au moins 10 min environ, de façon particulièrement préférée pendant une durée allant d'environ 30 min à 8h, et de façon plus particulièrement préférée pendant une durée allant d'environ 2h à 6h.

### Le deuxième métakaolin

Le deuxième métakaolin étant choisi parmi les kaolins calcinés à une température T_{c2} telle que T_{c2} - T_{c1} ≥ 100°C environ, il est différent du premier métakaolin tel que défini dans l'invention.

Le deuxième métakaolin est choisi de préférence parmi les kaolins calcinés à une température T_{c2} telle que T_{c2} - T_{c1} ≥ 150°C environ, de façon particulièrement préférée telle que T_{c2} - T_{c1} ≥ 200°C environ, et de façon plus particulièrement préférée telle que T_{c2} - T_{c1} ≥ 250°C environ.

Selon une forme de réalisation de l'invention, le deuxième métakaolin est un kaolin calciné à une température T_{c2} d'au moins 800°C environ, de préférence d'au moins 850°C environ, et de façon particulièrement préférée d'au moins 900°C environ.

Selon une forme de réalisation préférée de l'invention, le deuxième métakaolin est un kaolin calciné à une température T_{c2} d'au plus 1200°C environ, et de préférence d'au plus 1150°C environ.

Le deuxième métakaolin peut comprendre au moins 20% en mole environ, et de préférence au moins 30% en mole environ d'oxyde d'aluminium (Al₂O₃), par rapport au nombre de moles total du deuxième métakaolin.

Le deuxième métakaolin peut comprendre au plus 60% en mole environ, et de préférence au plus 50% en mole environ d'oxyde d'aluminium (Al₂O₃), par rapport au nombre de moles total du deuxième métakaolin.

Le deuxième métakaolin peut comprendre au moins 35% en mole environ, et de préférence au moins 45% en mole environ d'oxyde de silicium (SiO₂), par rapport au nombre de moles total du deuxième métakaolin.

Le deuxième métakaolin peut comprendre au plus 75% en mole environ, et de préférence au plus 65% en mole environ d'oxyde de silicium (SiO₂), par rapport au nombre de moles total du deuxième métakaolin.

À titre d'exemples de deuxième métakaolin, on peut citer les métakaolins vendus par la société Imérys, notamment celui commercialisé sous la référence PoleStar® 200R.

Le deuxième métakaolin peut être choisi parmi les kaolins calcinés à T_{c2} telle que définie dans l'invention, pendant au moins 1 min environ, de préférence pendant au moins 5 min environ, de façon particulièrement préférée pendant une durée allant d'environ 10 min à 2h, et de façon plus particulièrement préférée pendant une durée allant d'environ 15 min à 1h.

Le rapport massique [premier métakaolin/deuxième métakaolin] dans la composition géopolymère va de préférence de 0,1 à 2 environ, de façon particulièrement préférée de 0,5 à 1,0 environ, et de façon plus particulièrement préférée est d'environ 1.

La composition géopolymère peut comprendre de 5 à 50% en poids environ, et de préférence de 10 à 35% en poids environ de premier et deuxième métakaolins, par rapport au poids total de la composition géopolymère.

Les premier et deuxième métakaolins peuvent être analysés par analyse thermique différentielle (ATD) [absence ou présence d'un point ou pic de cristallisation], résonance magnétique nucléaire (RMN) [spectre RMN²⁷ Al], et/ou diffraction aux rayons X (DRX).

Le premier métakaolin présente de préférence un pic de cristallisation par analyse thermique différentielle, de façon particulièrement préférée à une température allant de 900 à 1060°C, et de façon plus particulièrement préférée à une température allant de 950 à 1010°C.

Le deuxième métakaolin comprend de préférence de la mullite.

### Le premier silicate alcalin

Le premier silicate alcalin peut être choisi parmi les silicates de sodium, les silicates de potassium, et l'un de leurs mélanges. Les silicates alcalins commercialisés par la société Silmaco ou par la société PQ Corporation sont préférés. Le premier silicate alcalin est de préférence un silicate de sodium.

Le premier silicate alcalin peut avoir un rapport molaire SiO₂/M₂O allant de 1,1 à 35 environ, de préférence de 1,3 à 10 environ, et de façon particulièrement préférée de 1,4 à 5 environ, avec M étant un atome de sodium ou de potassium, et de préférence un atome de sodium.

La composition géopolymère peut comprendre de 5 à 60% en poids environ, et de préférence de 10 à 50% en poids environ de premier silicate alcalin, par rapport au poids total de la composition géopolymère.

### La base alcaline

La base alcaline peut être de l'hydroxyde de sodium, ou de l'hydroxyde de potassium, et de préférence de l'hydroxyde de sodium.

La composition géopolymère peut être exempte de base alcaline. Cela permet ainsi d'améliorer la manipulation de la composition géopolymère, en particulier lors de la préparation d'un câble ou d'un accessoire.

### Le deuxième silicate alcalin

La composition géopolymère peut comprendre en outre un deuxième silicate alcalin différent du premier silicate alcalin.

Le deuxième silicate alcalin peut être choisi parmi les silicates de sodium, les silicates de potassium, et l'un de leurs mélanges. Les silicates alcalins commercialisés par la société Silmaco ou par la société PQ Corporation sont préférés. Le deuxième silicate alcalin est de préférence un silicate de sodium.

Les premier et deuxième silicates alcalins peuvent avoir respectivement des rapports molaires SiO₂/M₂O et SiO₂/M'₂O tels que M et M', identiques, sont choisis parmi un atome de sodium et un atome de potassium, et de préférence un atome de sodium, et lesdits rapports ont des valeurs différentes, de préférence des valeurs telles que leur différence est d'au moins 0,3, de façon particulièrement préférée telles que leur différence est d'au moins 0,5, et de façon plus particulièrement préférée telles que leur différence est d'au moins 1,0.

Selon une forme de réalisation de l'invention, la composition géopolymère comprend :
- un premier silicate alcalin ayant un rapport molaire SiO₂/M₂O allant de 1,5 à 2,6 environ, et
- un deuxième silicate alcalin ayant un rapport molaire SiO₂/M'₂O supérieur à 2,6, de préférence allant de 2,8 à 4,5 environ, et de façon particulièrement préférée allant de 3,0 à 4,0 environ, étant entendu que M' est identique à M.

La composition géopolymère peut comprendre de 10 à 60% en poids environ, et de préférence de 20 à 50% en poids environ de premier et deuxième silicates alcalins, par rapport au poids total de la composition géopolymère.

Le rapport massique [premier silicate alcalin/deuxième silicate alcalin] dans la composition géopolymère va de préférence de 0,5 à 2,5, et de façon particulièrement préférée de 0,8 à 2,0.

La composition géopolymère peut comprendre en outre un ou plusieurs additifs choisis parmi :
- un colorant,
- des fibres minérales, notamment choisies parmi les fibres d'alumine,
- un additif à structure polymère, notamment choisi parmi les fibres de polyoléfine telles que les fibres de polypropylène, de polyéthylène haute densité (HDPE), les aramides, et les fibres techniques de verre enduites de silicone ou d'un polymère organique de type polyéthylène ; un copolymère de styrène-butadiène (SBR) ; un copolymère de styrène-butadiène-éthylène (EBS) ; tous les dérivés des copolymères de styrène-éthylène, notamment ceux commercialisés par Kraton tels qu'un copolymère de styrène-éthylène-butylène-styrène (SEBS), un copolymère de styrène-butadiène-styrène (SBS), un copolymère de styrène-isoprène-styrène (SIS), un copolymère de styrène-propylène-éthylène (EPS) ou un copolymère de styrène-éthylène-propylène-styrène (SEPS) ; un copolymère d'éthylène et d'acétate de vinyle (EVA), un polyorganosiloxane réticulé (e.g. à l'aide d'un péroxyde) ; du polyéthylène éventuellement sous forme de poudre ; des lignosulfonates ; de l'acétate de cellulose ; d'autres dérivés de la cellulose ; une huile silicone de faible viscosité (e.g. de l'ordre de 12500 cPo) ; et une huile polyéthylène,

- un composé accélérant la prise en masse, notamment choisi parmi le sulfate d'aluminium, les aluns (e.g. sulfate double d'aluminium et de potassium), le chlorure de calcium, le sulfate de calcium, le sulfate de calcium hydraté, l'aluminate de sodium, le carbonate de sodium, le chlorure de sodium, le silicate de sodium, le sulfate de sodium, le chlorure de fer (III), et les lignosulfonates de sodium,
- un agent retardant la prise en masse, notamment choisi parmi l'ammonium, les métaux alcalins, les métaux alcalino-terreux, le borax, les lignosulfonates et en particulier les sels de métaux de lignosulfonates de calcium, les celluloses telles que la carboxyméthyl hydroéthyl cellulose, les lignines sulfoalkylées telles que par exemple la lignine sulfométhylée, les acides hydroxycarboxyliques, les copolymères de sels d'acide 2-acrylamido-2-méthylpropane sulfonique et d'acide acrylique ou d'acide maléique, et les sels saturés
- une charge inerte, notamment choisi parmi le talc, les micas, les argiles déshydratées, et le carbonate de calcium,
- un amidon,
- un plastifiant de l'amidon, notamment choisi parmi un stéarate de métal, un polyéthylène glycol, un éthylène glycol, un polyol comme le glycérol, le sorbitol, le mannitol, le maltitol, le xylitol ou un oligomère de l'un de ces polyols, un sucrose comme le glucose ou le fructose, un plastifiant contenant des groupes amides, et tout type de plastifiant à base de polysaccharide(s) modifié(s),
- un dérivé de la cellulose,
- un matériau carboné expansé tel qu'un graphite expansé.

Le colorant est de préférence un colorant liquide à température ambiante (i.e. à 18-25°C).

La composition géopolymère peut comprendre de 0,01 à 15% en poids environ d'additif(s), et de préférence de 0,5 à 8% en poids environ d'additif(s), par rapport au poids total de la composition géopolymère.

La composition géopolymère de l'invention est de préférence une composition géopolymère aluminosilicate, notamment comprenant de l'eau, du silicium (Si), de l'aluminium (Al), de l'oxygène (O), et au moins un élément choisi parmi le potassium (K), le sodium (Na), le lithium (Li), le césium (Cs), et le calcium (Ca), et de préférence choisi parmi le potassium (K) et le sodium (Na).

De par son homogénéité et ses propriétés rhéologiques, la composition géopolymère de l'invention convient pour la réalisation d'une couche, de préférence une couche électriquement isolante, d'un câble ou d'un accessoire pour câble. En d'autres termes, la composition géopolymère est destinée à être utilisée dans une couche, de préférence une couche électriquement isolante, d'un câble ou d'un accessoire pour câble. En effet, elle permet d'obtenir un câble ou d'un accessoire pour câble ayant de bonnes propriétés mécaniques, notamment en termes de flexibilité et de durabilité, tout en garantissant de bonnes propriétés de réaction et de résistance au feu.

L'invention a pour deuxième objet un procédé de préparation d'une composition géopolymère telle que définie dans le premier objet de l'invention, caractérisé en ce qu'il comprend au moins une étape i) de mélange des premier et deuxième métakaolins, avec le premier silicate alcalin, de l'eau, et éventuellement une base alcaline.

L'étape i) peut comprendre le mélange des premier et deuxième métakaolins, avec le premier silicate alcalin, de l'eau, éventuellement une base alcaline, et éventuellement un deuxième silicate alcalin.

Le deuxième silicate alcalin peut être tel que défini dans l'invention.

L'étape i) comprend de préférence les sous-étapes suivantes :
i-1) le mélange des premier et deuxième silicates alcalins, notamment sous agitation,
i-2) éventuellement l'ajout d'une base alcaline, notamment en maintenant l'agitation, et
i-3) l'ajout des premier et deuxième métakaolins, notamment en maintenant l'agitation

À l'issue de l'étape i) ou de la sous-étape i-3), on obtient une solution fluide et homogène.

La composition géopolymère comprend de préférence de 35% à 80% en poids environ, et de façon particulièrement préférée de 40% à 70% en poids environ de matières solides, par rapport au poids total de ladite composition géopolymère.

Les matières solides comprennent les premier et deuxième métakaolins, le premier silicate alcalin, et le deuxième silicate alcalin et la base alcaline s'ils existent.

Le rapport massique matières solides/eau dans ladite composition géopolymère peut permettre de déterminer la cinétique de solidification de ladite composition géopolymère.

Selon une forme de réalisation préférée de l'invention, le rapport massique matières solides/eau varie de 0,60 à 1,65 environ, et encore plus préférentiellement de 1,00 à 1,40 environ. Un tel rapport massique permet d'avoir une composition géopolymère assez fluide pour permettre sa manipulation, et dont la cinétique de solidification est assez lente pour permettre le formation d'une couche géopolymère de câble ou d'accessoire telle que définie ci-après.

### Le matériau composite

L'invention a pour troisième objet un matériau composite, caractérisé en ce qu'il comprend un matériau fibreux non tissé et un matériau géopolymère imprégnant ledit matériau fibreux non tissé, ledit matériau géopolymère étant obtenu à partir d'une composition géopolymère telle que définie dans le premier objet de l'invention.

### Le matériau fibreux non tissé

Le matériau fibreux non tissé a de préférence une structure souple et flexible.

Le matériau fibreux non tissé entrant dans la composition du matériau composite selon l'invention peut être choisi parmi les matériaux cellulosiques, les matériaux à base de polymères organiques synthétiques, les fibres de verre, et un de leurs mélanges, et de préférence parmi les matériaux à base de polymères organiques synthétiques.

Les matériaux cellulosiques peuvent être choisis parmi le papier, en particulier le papier buvard ; les matériaux non tissés fabriqués à partir de cellulose fonctionnalisée ou non fonctionnalisée ; les matrices à structure alvéolaire et/ou fibreuse fabriquées à partir de fibres naturelles d'acétate de cellulose.

Les matériaux à base de polymères organiques synthétiques peuvent être choisis parmi les matériaux polymères à matrice poreuse et/ou fibreuse de polyoléfine(s), en particulier ceux choisis parmi les homo- et copolymères de propylène, les homo- et copolymères d'éthylène, les polyéthylènes haute densité (HDPE), les polyamides aromatiques (aramides), les polyesters, et un de leurs mélanges.

Selon une forme de réalisation préférée de l'invention, le matériau fibreux non tissé est un polyéthylène téréphtalate (PET).

Le matériau fibreux non tissé présente de préférence un grammage allant de 50 à 120 g/cm² environ. Cela permet ainsi d'obtenir un matériau composite suffisamment flexible pour pouvoir être manipulée facilement, et suffisamment robuste pour obtenir une bonne protection au feu.

Le matériau fibreux non tissé peut en particulier se présenter sous la forme d'une bande ou d'un ruban.

Selon une forme de réalisation préférée de l'invention, le matériau fibreux non tissé représente de 2 à 95% en poids environ, de façon particulièrement préférée de 5 à 45% en poids environ, et encore plus préférentiellement de 10 à 35% en poids environ, par rapport au poids total du matériau composite.

### Le matériau géopolymère

Dans la présente invention, le matériau géopolymère est obtenu à partir d'une composition géopolymère telle que définie dans le premier objet de l'invention, de préférence par durcissement, géopolymérisation et/ou polycondensation de ladite composition géopolymère.

En particulier, la composition géopolymère telle que définie dans le premier objet de l'invention est apte à former un matériau géopolymère. Les ingrédients de la composition géopolymère peuvent donc subir une polycondensation pour former un matériau géopolymère. Le durcissement s'effectue par réaction interne du type polycondensation ou du type hydrothermal. Le durcissement n'est par exemple pas le résultat d'un simple séchage, comme c'est généralement le cas pour des liants à base de silicates alcalins.

En effet, les matériaux géopolymères résultent d'une réaction de polycondensation minérale par activation alcaline, dite géosynthèse, par opposition aux liants traditionnels hydrauliques dans lesquels le durcissement est le résultat d'une hydratation des aluminates de calcium et des silicates de calcium.

Dans la présente invention, l'expression « matériau géopolymère » signifie un matériau solide comprenant du silicium (Si), de l'aluminium (Al), de l'oxygène (O) et au moins un élément choisi parmi le potassium (K), le sodium (Na), le lithium (Li), le césium (Cs) et le calcium (Ca), et de préférence choisi parmi le potassium (K), et le sodium (Na).

Dans un mode de réalisation, le matériau géopolymère représente de 5 à 98% en poids environ, de préférence de 55 à 95% en poids environ, et de préférence encore de 65 à 90% en poids environ, par rapport au poids total du matériau composite.

### Le dispositif

L'invention a pour quatrième objet, un dispositif comprenant un câble d'énergie et/ou de télécommunication, et/ou un accessoire pour câble d'énergie et/ou de télécommunication, caractérisé en ce que ledit câble et/ou ledit accessoire pour câble comprend au moins une couche géopolymère comprenant au moins un matériau géopolymère obtenu à partir d'une composition géopolymère telle que définie dans le premier objet de l'invention.

### La couche géopolymère

Le matériau géopolymère peut être tel que défini dans le troisième objet de l'invention.

Selon un mode de réalisation, la couche géopolymère est constituée dudit matériau géopolymère.

Selon un autre mode de réalisation, la couche géopolymère comprend en outre un matériau fibreux non tissé tel que défini dans le troisième objet de l'invention. On peut ainsi obtenir une couche géopolymère comprenant ledit matériau composite ou constituée dudit matériau composite.

La couche géopolymère de l'invention est de préférence une couche retardante et résistante au feu.

Avantageusement, le dispositif conforme à l'invention satisfait à au moins l'une quelconque des normes de performances au feu suivantes : EN50200, IEC60331-1, EN50399, IEC60331-11, IEC60331-21, IEC60331-23, IEC60331-25, DIN4102, NBN713020 addendum 3, EN50577, NFC32070 CR1, IEC600332-1 et BS6387CWZ, et de préférence à au moins l'une quelconque des normes IEC60331-11, EN50399, et IEC60331-21.

Selon une forme de réalisation de l'invention, le dispositif conforme à l'invention satisfait à la norme EN 50399 (2012/02 + A1 2016), en particulier aux critères de classification B2ca, s1a, d0, a1 de ladite norme.

La couche géopolymère de l'invention peut être une couche extrudée et/ou une couche rubanée (i.e. sous la forme d'un ruban ou d'une bande), ou une couche sous la forme d'un bourrage (également appelée couche bourrante).

Lorsque la couche géopolymère est une couche extrudée et/ou rubanée, elle présente de préférence une épaisseur sensiblement constante et constitue notamment une enveloppe de protection continue.

La couche géopolymère présente de préférence une épaisseur allant de 0,2 à 5 mm environ, de façon particulièrement préférée de 0,5 à 4 mm, et de façon plus particulièrement préférée de 0,6 à 3 mm environ.

La couche peut en particulier comprendre 2 à 3 rubans superposés.

Lorsque l'épaisseur de la couche géopolymère est inférieure à 0,2 mm, la protection thermique du dispositif de l'invention n'est pas suffisante.

La couche géopolymère de l'invention est de préférence non poreuse.

La couche géopolymère de l'invention est de préférence une couche électriquement isolante.

Dans la présente invention, on entend par « couche électriquement isolante » une couche dont la conductivité électrique peut être d'au plus 1.10⁻⁸ S/m, de préférence d'au plus 1.10⁻⁹ S/m, et de façon particulièrement préférée d'au plus 1.10⁻¹⁰ S/m (siemens par mètre) (à 25°C environ en courant continu).

Grâce à la présence de la couche géopolymère, le dispositif conforme à l'invention présente de bonnes propriétés mécaniques tout en ayant de bonnes propriétés de retard à la flamme. En particulier, la couche géopolymère est suffisamment flexible pour permettre la manipulation du câble (e.g. enroulage, pliage, torsion) sans pour autant entrainer d'altération rédhibitoire de ladite couche qui aurait pour conséquence de diminuer sa cohésion et sa résistance au feu. Par ailleurs, la couche géopolymère reste intacte de la température ambiante à la température de fonctionnement du câble en charge (i.e. sous tension) et présente l'avantage de former une structure poreuse ordonnée dès 450°C, permettant ainsi d'assurer une protection renforcée contre la diffusion de la chaleur pendant le test au feu. Cette structure poreuse et rigide renferme de l'air qui par nature est un excellent isolant thermique.

En d'autres termes, la couche géopolymère se transforme sous l'effet d'une température élevée, notamment d'une température allant de 450°C à 1000°C, généralement atteinte lors d'un incendie, pour former une couche résiduelle cohésive et poreuse qui protège le câble ou l'accessoire pour câble, et notamment les couches sous-jacentes et/ou l'élément conducteur allongé.

Enfin, la couche géopolymère de l'invention présente une bonne élasticité ou souplesse, permettant de l'utiliser sous forme de ruban ou de bande.

### Le câble ou l'accessoire

La couche géopolymère est de préférence une couche interne dudit câble ou dudit accessoire pour câble.

Selon l'invention, on entend par « couche interne », une couche qui ne constitue pas la couche la plus externe du câble ou de l'accessoire pour câble.

Selon une première variante de l'invention, le dispositif comprend ou est un accessoire pour câble d'énergie et/ou de télécommunication.

Un accessoire pour câble peut être une jonction ou une terminaison.

De préférence, l'accessoire pour câble comprend :
- un assemblage de plusieurs couches de matériau polymère, généralement de type caoutchouc silicone, éventuellement une ou plusieurs couches de renfort, par exemple une ou plusieurs couches métalliques, et une gaine externe de protection (e.g. anti-feu) telle que par exemple un ruban élastomère ou une bande de mica, ou
- un assemblage d'une ou plusieurs couches de matériau polymère de type éthylène-propylène-diène monomère (EPDM), éventuellement une ou plusieurs couches de renfort, par exemple une ou plusieurs couches métalliques, et au moins une couche expansée d'EPDM, notamment sous la forme d'un tube à mémoire de forme.

Dans le cas d'une jonction ou d'une terminaison, la couche géopolymère peut plus particulièrement être une couche interposée entre la gaine externe de protection et l'une des couches de matériau polymère ; et/ou entre la gaine externe de protection ou la couche expansée d'EPDM, et l'une des couches de renfort, ladite couche géopolymère étant ou non en contact direct avec ladite gaine externe de protection ou la couche expansée d'EPDM.

Selon une deuxième variante de l'invention, le dispositif comprend ou est un câble d'énergie et/ou de télécommunication, ledit câble d'énergie et/ou de télécommunication comprenant préférentiellement au moins un élément conducteur allongé.

La couche géopolymère telle que définie dans l'invention peut entourer ledit élément conducteur allongé.

Selon une forme de réalisation préférée de l'invention, le dispositif est un câble électrique.

Le câble électrique peut comprendre au moins un élément électriquement conducteur allongé et au moins une couche géopolymère telle que définie dans l'invention, ladite couche géopolymère entourant ledit élément électriquement conducteur allongé.

Lorsque le câble électrique comprend une pluralité d'éléments électriquement conducteurs allongés, la couche géopolymère peut alors entourer la pluralité d'éléments électriquement conducteurs allongés du câble.

Le câble électrique peut comprendre une seule couche géopolymère telle que définie dans l'invention ou une pluralité de couches géopolymères telles que définies dans l'invention, de façon particulièrement préférée une seule couche géopolymère, et de façon plus particulièrement préférée une seule couche géopolymère interne.

Lorsque le câble électrique comprend une pluralité de couches géopolymères telles que définies dans l'invention, le câble électrique peut comprendre selon une première variante un ou plusieurs éléments électriquement conducteurs allongés et la pluralité de couches géopolymères entoure l'élément électriquement conducteur allongé ou la pluralité d'éléments électriquement conducteurs allongés.

À titre d'exemple, le câble électrique peut comprendre deux couches géopolymères telles que définies dans l'invention, lesdites couches géopolymères étant de préférence adjacentes.

Lorsque le câble électrique comprend une pluralité de couches géopolymères telles que définies dans l'invention, le câble électrique peut comprendre selon une deuxième variante une pluralité d'éléments électriquement conducteurs allongés et chacune des couches géopolymères entoure individuellement chacun des éléments électriquement conducteurs allongés pour former des éléments électriquement conducteurs allongés isolés.

La première variante est préférée.

Dans un mode de réalisation de cette première variante, le câble est un câble rayonnant. Il peut en particulier comprendre :
- un élément électriquement conducteur isolé,
- une couche métallique contenant une ou plusieurs ouvertures, ladite couche métallique entourant ledit élément électriquement conducteur isolé, et
- une couche géopolymère telle que définie dans l'invention, ladite couche géopolymère entourant la couche métallique.

Les ouvertures peuvent être des fentes, longitudinales ou faisant un angle avec l'axe du câble, des successions de trous alignés sur des segments parallèles à l'axe du câble, ou une fente continue de forme spécifique.

La couche métallique peut comprendre un métal choisi parmi le cuivre, et l'aluminium. Le cuivre est préféré.

La couche métallique est également appelée « conducteur extérieur ».

La couche métallique a de préférence une épaisseur allant de 0,1 à 0,3 mm.

L'élément électriquement conducteur est isolé avec une couche électriquement isolante, qui peut comprendre au moins une polyoléfine, et de façon particulièrement préférée choisie parmi les homopolymères et copolymères d'éthylène.

Dans un mode de réalisation, le matériau polymère de la couche électriquement isolante de l'élément électriquement conducteur allongé isolé est un matériau polymère expansé, tel que par exemple un polyéthylène expansé ou sous la forme d'une mousse.

Dans un mode de réalisation particulier, la couche géopolymère est directement en contact physique avec la couche métallique.

La couche métallique est communément appelé « conducteur externe ». Elle présente généralement la particularité de disposer d'ouvertures ou fentes, par exemple agencées en motifs répétés périodiquement tout le long du câble. Grâce aux ouvertures ou fentes, des niveaux contrôlés d'énergie électromagnétique peuvent rayonner vers l'extérieur et vers l'intérieur du câble. Le câble peut alors fonctionner comme une longue antenne.

Le câble d'énergie et/ou de télécommunication de l'invention peut comprendre en outre une gaine externe de protection, notamment électriquement isolante, entourant la ou les couche(s) géopolymère(s).

La couche géopolymère peut alors être une couche interposée entre l'élément conducteur allongé et la gaine externe de protection.

La gaine externe de protection est de préférence réalisée en un matériau exempt d'halogène. Elle peut être réalisée classiquement à partir de matériaux retardant la propagation de la flamme ou résistant à la propagation de la flamme. Notamment, si ces derniers ne contiennent pas d'halogène, on parle de gainage de type HFFR (pour l'anglicisme « *Halogen Free Flame Retardant* »).

La gaine externe de protection représente la couche la plus externe du câble. Elle permet d'assurer l'intégrité mécanique du câble.

Elle comprend au moins un polymère organique ou inorganique.

Le choix du polymère organique ou inorganique n'est pas limitatif et ceux-ci sont bien connus de l'homme du métier.

Selon une forme de réalisation préférée de l'invention, le polymère organique ou inorganique est choisi parmi les polymères réticulés et non réticulés.

Le polymère organique ou inorganique peut être un homo- ou un co-polymère ayant des propriétés thermoplastiques et/ou élastomères.

Les polymères inorganiques peuvent être des polyorganosiloxanes.

Les polymères organiques peuvent être des polyuréthanes ou des polyoléfines.

Les polyoléfines peuvent être choisies parmi les polymères d'éthylène et de propylène. A titre d'exemple de polymères d'éthylène, on peut citer le polyéthylène linéaire basse densité (LLDPE), le polyéthylène basse densité (LDPE), le polyéthylène moyenne densité (MDPE), le polyéthylène haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR), les terpolymères d'éthylène et de propylène (EPT) tels que par exemple les terpolymères d'éthylène propylène diène monomère (EPDM) ou un de leurs mélanges.

Le polymère de la gaine externe de protection est de préférence un polymère organique, de préférence encore un polymère d'éthylène, et de préférence encore un copolymère d'éthylène et d'acétate de vinyle, un polyéthylène linéaire basse densité ou un de leurs mélanges.

La gaine externe de protection peut comprendre en outre une charge minérale ignifugeante hydratée. Cette charge minérale ignifugeante hydratée agit principalement par voie physique en se décomposant de manière endothermique (e.g. libération d'eau), ce qui a pour conséquence d'abaisser la température de la gaine et de limiter la propagation des flammes le long du câble. On parle notamment de propriétés de retard à la flamme, bien connues sous l'anglicisme « *flame retardant* ».

La charge minérale ignifugeante hydratée peut être un hydroxyde métallique tel que l'hydroxyde de magnésium ou le trihydroxyde d'aluminium.

La gaine externe de protection peut comprendre en outre une charge inerte, notamment choisi parmi le talc, les micas, les argiles déshydratées et un de leurs mélanges.

L'invention a pour cinquième objet un procédé de fabrication d'un dispositif comprenant un câble d'énergie et/ou de télécommunication, et/ou un accessoire pour câble d'énergie et/ou de télécommunication tel que défini selon le quatrième objet de l'invention, caractérisé en ce qu'il comprend au moins les étapes suivantes :
1) la préparation d'une composition géopolymère selon un procédé tel que défini dans le deuxième objet de l'invention ; et
   l'étape 2A) ou la séquence d'étapes 2B-i) et 2B-ii) suivante :
   2A) la formation d'une couche géopolymère à partir de la composition géopolymère obtenue à l'étape 1) :
      - soit autour d'un ou de plusieurs éléments conducteurs allongés, et/ou autour d'une couche interne d'un câble d'énergie et/ou de télécommunication, lorsque le dispositif est un câble,
      - soit autour d'au moins l'une des couches d'une jonction ou d'une terminaison, lorsque le dispositif est un accessoire pour câble ; ou
   2B-i) l'application d'un matériau fibreux non tissé :
      - soit autour d'un ou de plusieurs éléments conducteurs allongés, et/ou autour d'une couche interne d'un câble d'énergie et/ou de télécommunication, lorsque le dispositif est un câble, pour obtenir un ensemble câble/matériau fibreux non tissé,
      - soit autour d'au moins l'une des couches d'une jonction ou d'une terminaison, lorsque le dispositif est un accessoire pour câble, pour obtenir un ensemble accessoire pour câble/matériau fibreux non tissé, et
   2B-ii) la formation d'une couche géopolymère, par imprégnation de l'ensemble câble/matériau fibreux non tissé ou accessoire pour câble/matériau fibreux non tissé obtenu à l'étape 2B-i) précédente, avec ladite composition géopolymère obtenue à l'étape 1).

Le procédé conforme à l'invention est rapide, simple et avantageux d'un point de vue économique. Il permet de fabriquer en peu d'étapes un dispositif présentant de bonnes propriétés mécaniques, notamment en termes de flexibilité et de durabilité, tout en garantissant une bonne résistance au feu.

La séquence d'étapes 2B-i) et 2B-ii) est préférée.

Au cours des étapes 2A) et 2B-ii), la composition géopolymère subit un durcissement, une géopolymérisation et/ou une polycondensation pour former un matériau géopolymère tel que défini dans l'invention. Toutefois, lors de ces étapes, le durcissement est contrôlé, progressif, de sorte que lesdites étapes 2A) et 2B-ii) sont faciles à mettre en œuvre.

Lorsque le dispositif est un câble d'énergie et/ou de télécommunication, l'étape 2A) peut être effectuée :
- par extrusion de ladite composition géopolymère autour d'un ou de plusieurs éléments conducteurs allongés et/ou autour d'une couche interne d'un câble d'énergie et/ou de télécommunication, ou
- par formation d'une bande ou d'un ruban à partir de ladite composition géopolymère, puis enroulement de ladite bande ou ruban autour d'un ou de plusieurs éléments conducteurs allongés et/ou autour d'une couche interne d'un câble d'énergie et/ou de télécommunication.

Lorsque le dispositif est un accessoire, l'étape 2A) peut être effectuée par formation d'une bande ou d'un ruban à partir de ladite composition géopolymère, puis enroulement de ladite bande ou ruban autour d'au moins l'une des couches d'une jonction ou d'une terminaison.

L'extrusion peut être effectuée à température ambiante ou à chaud, notamment à une température allant de 60°C à 110°C environ, et de préférence de 70°C à 95°C environ.

La bande ou le ruban peut être obtenue par extrusion, notamment à une température allant de 20 à 90°C environ ou par calandrage à température ambiante (e.g. 20-25°C).

L'enroulement peut en outre être effectué avec des zones de recouvrement.

Selon une forme de réalisation particulière de l'invention, et lorsque le dispositif est un câble d'énergie et/ou de télécommunication, le procédé peut comprendre en outre avant, pendant ou après l'étape 2A) ou la séquence d'étapes 2B-i) et 2B-ii), une étape 3) d'application d'une gaine externe de protection telle que définie dans le premier objet de l'invention, notamment électriquement isolante, autour de la couche géopolymère.

La réalisation de cette gaine externe de protection peut notamment être réalisée par extrusion ou co-extrusion.

L'étape 3) est généralement effectuée à une température allant de 145°C à 220°C environ.

L'invention sera mieux comprise, et d'autres buts, détails, caractéristiques et avantages de celle-ci apparaîtront plus clairement au cours de la description suivante de modes de réalisation particuliers de l'invention, donnés uniquement à titre illustratif et non limitatif, en référence à la figure annexée.

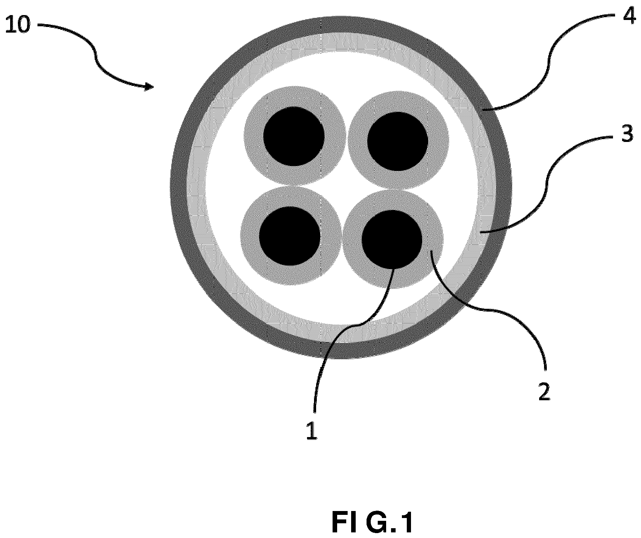

La figure 1 est une vue schématique d'un câble électrique selon un mode de réalisation de la présente invention.

Pour des raisons de clarté, seuls les éléments essentiels pour la compréhension de l'invention ont été représentés de manière schématique sur ces figures, et ceci sans respect de l'échelle.

Le câble électrique 10, illustré sur la figure 1, correspond à un câble électrique résistant au feu de type K25 ou RZ1K.

Ce câble électrique 10 comprend quatre éléments électriquement conducteurs allongés 1, chacun étant isolé avec une couche électriquement isolante 2, et, successivement et coaxialement autour de ces quatre éléments électriquement conducteurs allongés isolés (1, 2), une couche géopolymère 3 telle que définie dans l'invention entourant les quatre éléments électriquement conducteurs allongés isolés (1, 2), et une gaine externe 4 de type HFFR entourant la couche géopolymère 3. La couche géopolymère 3 est de préférence constituée d'un matériau composite tel que défini dans l'invention, et se présente avantageusement sous la forme d'un ruban.

Les exemples suivants permettent d'illustrer la présente invention. Ils n'ont pas de caractère limitatif sur la portée globale de l'invention telle que présentée dans les revendications. Les rapports entre les oxydes sont des rapports molaires et les % indiqués sont en poids.

### EXEMPLES

Les matières premières utilisées dans les exemples, sont listées ci-après :
- solution aqueuse d'un premier silicate de sodium à 50% massique environ de type « *waterglass* », Simalco, silicate de sodium de rapport molaire SiO₂/Na₂O de 2,0 environ,
- solution aqueuse d'un deuxième silicate de sodium à 38% massique environ de type « *waterglass* », Simalco, silicate de sodium de rapport molaire SiO₂/Na₂O de 3,4 environ,
- premier métakaolin, PoleStar® 450, Imerys, de rapport molaire Al₂O₃/SiO₂ de 41/55 (i.e. de 0,745 environ), kaolin calciné à une température de 700°C environ,
- deuxième métakaolin, PoleStar® 200R, Imerys, de rapport molaire Al₂O₃/SiO₂ de 41/55 (i.e. de 0,745 environ), kaolin calciné à une température de 1000°C environ, et
- matériau non tissé en Polyester, GT320, GECA TAPES.

Sauf indications contraires, toutes ces matières premières ont été utilisées telles que reçues des fabricants.

### Exemple 1 : préparation d'un dispositif résistant au feu conforme à l'invention

Une composition géopolymère conforme à l'invention a été préparée de la façon suivante : une solution aqueuse de silicates alcalins a été préparée en mélangeant 40 g d'une solution aqueuse à 50% d'un premier silicate de sodium et 40 g d'une solution aqueuse à 38% d'un deuxième silicate de sodium. Puis, 10 g d'un premier métakaolin et 10 g d'un deuxième métakaolin ont été mélangés avec la solution aqueuse de silicates alcalins. Ladite composition géopolymère comprend 55,2% en poids environ de matières solides, par rapport à la masse totale de ladite composition géopolymère.

Un matériau non tissé en polyester a ensuite été enroulé autour d'un câble basse tension comprenant 5 conducteurs de section 1,5 mm².

L'ensemble a été imprégné dans la composition géopolymère telle que préparée ci-avant. La couche géopolymère obtenue avait une épaisseur de 1,05 mm environ. L'assemblage obtenu a ensuite été recouvert par extrusion à chaud d'une gaine protectrice polymère à base d'un mélange HFFR produit par NEXANS à base de polyéthylène et de charges ignifugeantes, ladite gaine ayant une épaisseur de 2 mm environ. On a ainsi obtenu un câble conforme à l'invention. Les performances à la flamme du câble sont déterminées suivant la norme EN50399. 15 tronçons de câble positionnés sur une échelle verticale sont exposés à une flamme 20kW de puissance pendant 20 min. Les résultats sont reportés dans le tableau 1 ci-dessous :

**TABLEAU 1**

| **Paramètres de performances** | **Valeurs** | **Classe selon EN50399** |
|---|---|---|
| pHRR (kW) | 13,8 | B2 |
| Temps au pic HRR (s) | 912 | |
| THR (MJ) | 5,2 | |
| FIGRA (w/s) | 23,6 | |
| propagation de la flamme (m) | 0,56 | |
| Gouttelettes enflammées | Aucune | d0 |
| SPR (m²/s) | 0,03 | s1 |
| Temps au pic SPR (s) | 876 | |
| TSP (m²) | 28,12 | |

Dans ce tableau, l'acronyme HRR correspond à l'expression anglophone « *Heat Release Rate* » qui renseigne sur le débit calorifique, l'acronyme THR correspond à l'expression anglophone « *Total Heat Release* » qui renseigne sur la quantité de chaleur dégagée lors de la combustion, l'acronyme FIGRA correspond à l'expression anglophone « *FIre GRowth rAte* » qui renseigne sur la vitesse de croissance du feu, l'acronyme SPR correspond à l'expression anglophone « *Smoke Production Rate* » qui renseigne sur la vitesse de production de fumée, et l'acronyme TSP correspond à l'expression anglophone « *Total Smoke Production* » qui renseigne sur la quantité totale de fumée produite.

Ces résultats démontrent que le câble conforme à l'invention présente les propriétés de protection au feu maximales au regard des exigences de la norme Européenne EN50399.

La couche géopolymère telle qu'obtenue dans l'exemple 1 ci-dessus (dénommé ci-après **C1**) a été comparé du point de vue de ses propriétés mécaniques à titre comparatif avec une couche géopolymère non conforme à l'invention (dénommé ci-après **C2**) comprenant une couche géopolymère à base uniquement d'un premier métakaolin et d'un premier silicate alcalin, en particulier obtenue à partir d'une composition géopolymère comprenant 30 g d'une solution aqueuse à 50% du premier silicate de sodium, 1 g d'eau, 8 g d'hydroxyde de sodium, et 9 g du premier métakaolin.

Des tests de résistance à la traction (TS) et d'élongation à la rupture (EB) ont été effectués sur les couches obtenues selon la Norme NF EN 60811-1-1, à l'aide d'un appareil commercialisé sous la référence 3345 par la société Instron.

Les résultats correspondant à chacun de ces tests sont présentés dans le tableau 2 ci-dessous :

**TABLEAU 2**

| **Propriétés** | **C1** | **C2 (*)** |
|---|---|---|
| TS (MPa) | 25,65 | 10,69 |
| EB (%) | 47,12 | 42,62 |
| TS après 15 jours (MPa) | 24,94 | Ruban cassant |
| EB après 15 jours (%) | 45,13 | Ruban cassant |

| | | |
|---|---|---|
| (*) Couche géopolymère comparative ne faisant pas partie de l'invention | | |

L'ensemble de ces résultats montre que la composition géopolymère de l'invention permet d'obtenir une couche géopolymère présentant des propriétés mécaniques bien meilleures en termes de résistance à la traction et d'élongation à la rupture, par rapport à une composition géopolymère de l'état de l'art ; tout en garantissant de bonnes propriétés de retard à la flamme. En particulier, après 15 jours, la couche géopolymère de l'invention présente toujours ses propriétés mécaniques initiales, alors que la couche géopolymère de l'état de l'art se casse, rendant impossible toutes mesures de résistance à la traction et d'élongation à la rupture.

## Revendications

1. Composition géopolymère, **caractérisée en ce qu'**elle comprend un premier métakaolin choisi parmi les kaolins calcinés à une température T_{c1} d'au moins 650°C, et un deuxième métakaolin choisi parmi les kaolins calcinés à une température T_{c2} telle que T_{c2} - T_{c1} ≥ 100°C, au moins un premier silicate alcalin, de l'eau, et éventuellement une base alcaline.

2. Composition géopolymère selon la revendication 1, **caractérisée en ce que** le premier métakaolin est un kaolin calciné à une température T_{c1} d'au moins 700°C.

3. Composition géopolymère selon la revendication 1 ou 2, **caractérisée en ce que** le premier métakaolin comprend au moins 20% en mole d'oxyde d'aluminium, par rapport au nombre de moles total du premier métakaolin.

4. Composition géopolymère selon l'une quelconque des revendications précédentes, **caractérisée en ce que** le premier métakaolin comprend au moins 35% en mole d'oxyde de silicium, par rapport au nombre de moles total du premier métakaolin.

5. Composition géopolymère selon l'une quelconque des revendications précédentes, **caractérisée en ce que** le deuxième métakaolin est un kaolin calciné à une température T_{c2} d'au moins 800°C.

6. Composition géopolymère selon l'une quelconque des revendications précédentes, **caractérisée en ce que** le deuxième métakaolin comprend au moins 20% en mole d'oxyde d'aluminium, par rapport au nombre de moles total du deuxième métakaolin.

7. Composition géopolymère selon l'une quelconque des revendications précédentes, **caractérisée en ce que** le deuxième métakaolin comprend au moins 35% en mole d'oxyde de silicium, par rapport au nombre de moles total du deuxième métakaolin.

8. Composition géopolymère selon l'une quelconque des revendications précédentes, **caractérisée en ce que** le rapport massique [premier métakaolin/deuxième métakaolin] dans la composition géopolymère va de 0,1 à 2.

9. Composition géopolymère selon l'une quelconque des revendications précédentes, **caractérisée en ce qu'**elle comprend de 5 à 50% en poids de premier et deuxième métakaolins, par rapport au poids total de la composition géopolymère.

10. Composition géopolymère selon l'une quelconque des revendications précédentes, **caractérisée en ce qu'**elle comprend en outre un deuxième silicate alcalin différent du premier silicate alcalin.

11. Composition géopolymère selon la revendication 10, **caractérisée en ce qu'**elle comprend de 10 à 60% en poids de premier et deuxième silicates alcalins, par rapport au poids total de la composition géopolymère.

12. Procédé de préparation d'une composition géopolymère telle que définie à l'une quelconque des revendications précédentes, **caractérisé en ce qu'**il comprend au moins une étape i) de mélange des premier et deuxième métakaolins, avec le premier silicate alcalin, de l'eau, et éventuellement une base alcaline.

13. Matériau composite, **caractérisé en ce qu'**il comprend un matériau fibreux non tissé et un matériau géopolymère imprégnant ledit matériau fibreux non tissé, ledit matériau géopolymère étant obtenu à partir d'une composition géopolymère telle que définie à l'une quelconque des revendications 1 à 11.

14. Matériau composite selon la revendication 13, **caractérisé en ce que** le matériau fibreux non tissé est choisi parmi les matériaux cellulosiques, les matériaux à base de polymères organiques synthétiques, les fibres de verre, et un de leurs mélanges.

15. Dispositif comprenant un câble d'énergie et/ou de télécommunication, et/ou un accessoire pour câble d'énergie et/ou de télécommunication, **caractérisé en ce que** ledit câble et/ou ledit accessoire pour câble comprend au moins une couche géopolymère comprenant au moins un matériau géopolymère obtenu à partir d'une composition géopolymère telle que définie à l'une quelconque des revendications 1 à 11.

16. Procédé de fabrication d'un dispositif comprenant un câble d'énergie et/ou de télécommunication, et/ou un accessoire pour câble d'énergie et/ou de télécommunication tel que défini dans la revendication 15, **caractérisé en ce qu'**il comprend au moins les étapes suivantes :
1) la préparation d'une composition géopolymère selon un procédé tel que défini dans la revendication 12 ; et
l'étape 2A) ou la séquence d'étapes 2B-i) et 2B-ii) suivante :
2A) la formation d'une couche géopolymère à partir de la composition géopolymère obtenue à l'étape 1) :
- soit autour d'un ou de plusieurs éléments conducteurs allongés, et/ou autour d'une couche interne d'un câble d'énergie et/ou de télécommunication, lorsque le dispositif est un câble,
- soit autour d'au moins l'une des couches d'une jonction ou d'une terminaison, lorsque le dispositif est un accessoire pour câble ; ou
2B-i) l'application d'un matériau fibreux non tissé :
- soit autour d'un ou de plusieurs éléments conducteurs allongés, et/ou autour d'une couche interne d'un câble d'énergie et/ou de télécommunication, lorsque le dispositif est un câble, pour obtenir un ensemble câble/matériau fibreux non tissé,
- soit autour d'au moins l'une des couches d'une jonction ou d'une terminaison, lorsque le dispositif est un accessoire pour câble, pour obtenir un ensemble accessoire pour câble/matériau fibreux non tissé, et
2B-ii) la formation d'une couche géopolymère, par imprégnation de l'ensemble câble/matériau fibreux non tissé ou accessoire pour câble/matériau fibreux non tissé obtenu à l'étape 2B-i) précédente, avec ladite composition géopolymère obtenue à l'étape 1).
